# EUROPÄISCHE PATENTANMELDUNG

(11) **EP 3 974 395 A1**
(43) Veröffentlichungstag der Anmeldung: **30.03.2022**
(21) Anmeldenummer: 21198219.4
(22) Anmeldetag: 22.09.2021
(51) Int. Cl.: C03C 3/089, C03C 8/14, C04B 41/81, C09C 1/00, C08K 3/40, C09D 11/00

(54) **PIGMENT/FRITTEN-GEMISCH**

(30) Priorität: 25.09.2020 EP 20198545
(71) Anmelder: Merck Patent GmbH, 64293 Darmstadt (DE)
(72) Erfinder: Wilhelm, Volker, 64293 DARMSTADT (DE); Semiller, Michael, 64293 DARMSTADT (DE); Falkowski, Pawel, 64293 DARMSTADT (DE); Bai, Robert, SHANGHAI 201206 (CN); Zhang, Emma (Ke), SHANGHAI, 201206 (CN); Sheng, Junhui (Ivan), SHANGHAI, 201206 (CN)

(57) **Zusammenfassung**

Die Erfindung betrifft Fritten bzw. Frittengemische mit Effektpigmenten für keramische Glasuren, die unterhalb von ≤ 950 °C, vorzugsweise von 720°C bis 950 °C, stabil, sind und in Glasuren einen sogenannten Liquid Metal-Effekt erzeugen.

## Beschreibung

Die Erfindung betrifft Fritten bzw. Frittengemische mit Effektpigmenten für keramische Glasuren, die unterhalb von ≤ 950 °C stabil sind und in Keramik-Glasuren einen sogenannten "Liquid Metal Effect" erzeugen.

Zur Dekoration von keramischen, metallischen oder glasartigen Werkstoffen werden häufig Effektpigmente eingesetzt. Hierzu werden die Effektpigmente mit sogenannten Glasfritten/ Flüssen gemischt und mittels eines Mediums auf das zu dekorierende Werkstück aufgebracht. Das Medium richtet sich hier nach der Applikationsart. Für Siebdruck kann es z.B. ein Siebdruckmedium sein, für die Sprühapplikation ein sprühfähiges Bindemittelgemisch oder für Tauchapplikationen ein entsprechender Schlicker. Das Medium dient lediglich zur Applikation und ist für die Farbgebung weniger relevant. Allen Methoden ist gemein, dass die aufgebrachte Dekorationsschicht abschließend gebrannt wird, um eine glasartige Schicht, welche die Effektpigmente umhüllt, auf dem Werkstück zu bilden. Die organischen Bestandteile (Medium/Bindemittel/Schlicker/etc.) zersetzen sich beim Brennvorgang und die Glasfritte/Fluss wird fließfähig. Somit wird aus dem Pulvergemisch bestehend aus Frittenpulver und Effektpigment eine Einheit. Es entsteht eine Kompositschicht bestehend aus Effektpigmenten, welche in einer durchgehenden Glasmatrix eingebettet sind.

Der Einsatz goldener Effektpigmente basierend auf plättchenförmigen Substraten zur Erzielung von glitzernden Perlglanz oder Metallic-Effekten in keramischen Glasuren ist z.B. bekannt aus der DE 10 2015 013 400 A1 und CN 101462895A.

Mit den aus dem Stand der Technik bekannten Fritten und Kombinationen aus Fritten und Effektpigmenten, wie z.B. beschrieben in DE 39 32 424 C1, GB 2 096 592 A, US 5,783,506, US 4,353,991, EP 0 419843 A1 sind metallisch glitzernde, matte und seidenmatte Glasuren erzielbar.

Hochglänzende und nichtglitzernde Oberflächen, wie man sie von polierten Metallen kennt, werden durch die starre, plättchenförmige Struktur der Effektpigmente verhindert. Hinzu kommt die nicht vollkommen planparallele Ausrichtung der Pigmente zur Oberfläche der Glasur. Der daraus resultierende Glitzereffekt ist in vielen Fällen durchaus erwünscht. Es besteht über die derzeit verfügbaren technischen Lösungen hinaus aber auch Bedarf an hochglänzenden Oberflächen mit metallischer Anmutung ohne jedes Glitzern, wie sie bei flüssigen Metallen beobachtet werden. Solch ein Effekt wird deshalb auch als Liquid-Metal-Effekt bezeichnet. Allgemein bekannt sind entsprechende Dekore, z.B. als Goldränder auf Geschirr. Mit den derzeit kommerziell verfügbaren pigmentbasierten Dekorationsmöglichkeiten sind derartige Oberflächen nicht zugänglich: das Dekor erscheint seidenglänzend und glitzernd oder der Metall-Effekt geht durch Zersetzung des Pigments in der aggressiven Frittenumgebung oder während des Brennprozesses weitgehend oder vollständig verloren. Zur Erzielung des Liquid-Metal-Effekts werden deshalb sehr teure Edelmetall-Präparate auf der Basis von Gold und Platin eingesetzt. Derartige Dekore sind teuer und empfindlich gegenüber der Reinigung in Geschirrspülmaschinen und dem Einsatz in Mikrowellenherden. Der kombinierte Einsatz von Edelmetallpräparaten mit Pigmenten ist ebenfalls nicht möglich.

Aufgabe der vorliegenden Erfindung ist die Gestaltung metallischgoldfarbener Keramik-Glasuren, die unterhalb von ≤ 950 °C stabil sind, mit hohem Glanz und ohne Glitzern mit Hilfe von Effektpigmenten.

Überraschenderweise wurde gefunden, dass durch die Verwendung von speziellen Fritten in Kombination mit Effektpigmenten, die mindestens zwei Pseudobrookit-Schichten aufweisen, Glasuren für keramische Oberflächen erzielt werden können, welche in ihrer Erscheinung glänzenden Metalloberflächen (Liquid Metal Effect) sehr nahekommen. Derartige Kombinationen eignen sich daher als Ersatz für die bislang für diesen Zweck ausschließlich genutzten Gold-basierenden Pasten. Geeignete Fritten sind solche, die ein genau definiertes Verhältnis der Basiskomponenten Al₂O₃ und Si₂O₃ und der Flussbildner B₂O₃, Na₂O und K₂O aufweisen. Das Effektpigment wird während des Einbrands aufgelöst, wobei Auflösen bedeutet, dass in einem sehr aggressiven Medium die Metalloxide des Pigments kleinste Kristalle bilden, die den Brechungsindex der Glasur an deren Oberfläche verändern und für den sogenannten Liquid Metal Effect verantwortlich sind. Die eigentlichen Farbkörper werden also erst während des Einbrandes in situ gebildet, da die Pigmente sich während des Einbrandes auflösen und in situ eine glänzende Glasuroberfläche mit einem Liquid Metal Effect bilden.

Gegenstand der Erfindung ist daher ein Effektpigment/Fritten-Gemisch, dass sich dadurch auszeichnet, dass die Fritte 50-70 Gew.% SiO₂ + Al₂O₃ und 15-35 Gew.% B₂O₃ + Na₂O + K₂O enthält, wobei der Gesamtanteil aller Bestandteile der Fritte 100 % beträgt und in der Zusammensetzung der Fritte die folgenden Komponenten (in Gew.%) der Summenformel Al₂O₃ + Si₂O₃ - B₂O₃ - Na₂O - K₂O = 20-50 % beträgt und das Effektpigment auf plättchenförmigen Substraten basiert, die auf der Oberfläche des Substrats mindestens eine Schichtenfolge
(A) einer hochbrechenden Beschichtung mit einem Brechungsindex von n ≥ 1,8
(B) einer Pseudobrookit-Schicht, die optional mit ein oder mehreren Oxiden in Mengen von ≤ 10 Gew.% bezogen auf Schicht (B) dotiert sein kann,
(C) einer niedrigbrechenden Schicht mit einem Brechungsindex von n < 1,8
(D) einer hochbrechenden Beschichtung mit einem Brechungsindex von n ≥ 1,8 bestehend aus mindestens zwei farblosen Metalloxidschichten
(E) einer Pseudobrookit-Schicht, die optional mit ein oder mehreren Oxiden in Mengen von ≤ 10 Gew.% bezogen auf Schicht (E) dotiert sein kann,
   und optional
(F) einer äußeren Schutzschicht
aufweisen.

Das erfindungsgemäße Effektpigment-/Fritten-Gemisch ermöglicht Glasuren für keramische Oberflächen, die in ihrer Erscheinung glänzenden Metalloberflächen (Liquid metal effect), wie z.B. goldenen Oberflächen, sehr nahe kommen.

Die Glasuren aus dem erfindungsgemäßen Pigment/Fritten-Gemisch sind abriebbeständig und stabil gegen Detergenzien sowie die unter den bei der Reinigung von Geschirr üblichen mechanischen Belastungen. Darüber hinaus können sie problemlos in Mikrowellenherden eingesetzt werden.

Das Pigment-Fritten-Gemisch eignet sich zur Dekoration keramischer Gegenstände ausgewählt aus der Gruppe Porzellan, Bone China und Steingut, insbesondere Feinsteinzeugfliesen, Steinzeugfliesen, Steingutfliesen, Hartporzellan, Weichporzellan, Fine China, Biskuitporzellan, Steinzeugporzellan und Steingutporzellan.

In einer bevorzugten Ausführungsform besteht das erfindungsgemäße Pigment/Fritten-Gemisch aus 20-70 Gew.% Effektpigment und 30-80 Gew.% Fritte und optional 0-10 Gew.% ein oder mehrerer Additive, wobei die Summe aus Pigment, Fritte und Additiven 100 % ergibt. Wenn der Pigment-Gewichtsanteil im Effektpigment/Fritten-Gemisch bevorzugt 20-70 Gew.%, ganz besonders bevorzugt 25-60 Gew.% bezogen auf das Pigment/Fritten-Gemisch, beträgt, wird eine optimale Orientierung der Farbkörper erzielt.

Ein wesentlicher Bestandteil des erfindungsgemäßen Effektpigment-/Fritten-Gemisches ist das Effektpigment.

Geeignete Basissubstrate für die erfindungsgemäßen Effektpigmente sind semitransparente und transparente plättchenförmige Substrate. Bevorzugte Substrate sind Schichtsilikatplättchen, SiC-, TiC-, WC-, B₄C-, BN-, Graphit-, TiO₂- und Fe₂O₃-Plättchen, dotierte oder undotierte Al₂O₃-Plättchen, dotierte oder undotierte Glasplättchen, dotierte oder undotierte SiO₂-Plättchen, TiO₂-Plättchen, BiOCl und deren Gemische. Aus der Gruppe der Schichtsilikate sind insbesondere bevorzugt natürliche und synthetische Glimmerplättchen, Muskovit, Talk und Kaolin. Als synthetischer Glimmer findet vorzugsweise Fluorophlogopit oder Zn-Phlogopit als Substrat Anwendung.

Die Glasplättchen können aus allen dem Fachmann bekannten Glasarten bestehen, sofern sie im angewendeten Brennbereich temperaturstabil sind. Geeignete Gläser sind z.B. Quarzglas, A-Glas, E-Glas, C-Glas, ECR-Glas, Altglas, Alkaliboratglas, Alkalisilikatglas, Borosilikatglas, Duran^{®}-Glas, Laborgeräteglas oder optisches Glas.

Der Brechungsindex der Glasplättchen liegt vorzugsweise bei 1,45-1,80, insbesondere bei 1,50-1,70. Besonders bevorzugt bestehen die Glassubstrate aus C-Glas, ECR-Glas oder Borosilikatglas.

Synthetische Substratplättchen, wie z.B. Glasplättchen, SiO₂-Plättchen, Al₂O₃-Plättchen, können dotiert oder undotiert sein. Sofern sie dotiert sind, handelt es sich bei der Dotierung vorzugsweise um Al, N, B, Ti, Zr, Si, In, Sn, oder Zn bzw. deren Gemische. Ferner können weitere Ionen aus der Gruppe der Übergangsmetalle (V, Cr, Mn, Fe, Co, Ni, Cu, Y, Nb, Mo, Hf, Sb, Ta, W) und Ionen aus der Gruppe der Lanthaniden als Dotierstoffe dienen.

Im Falle von Al₂O₃ ist das Substrat vorzugsweise undotiert oder mit TiO₂, ZrO₂ oder ZnO dotiert. Bei den Al₂O₃-Plättchen handelt es sich vorzugsweise um Korund. Geeignete Al₂O₃-Plättchen sind vorzugsweise dotierte oder undotierte α-Al₂O₃-Plättchen, insbesondere mit TiO₂ oder ZrO₂ dotierte α-Al₂O₃-Plättchen.

Sofern das Substrat dotiert ist, beträgt der Anteil der Dotierung vorzugsweise 0,01 - 5 Gew. %, insbesondere 0,10 - 3 Gew.% bezogen auf das Substrat.

Die Größe der Basissubstrate ist an sich nicht kritisch und kann auf den jeweiligen Anwendungszweck abgestimmt werden. In der Regel haben die plättchenförmigen Substrate eine Dicke zwischen 0,05 und 5 µm, insbesondere zwischen 0,1 und 4,5 µm.

Es können auch Substrate unterschiedlicher Partikelgrößen eingesetzt werden. Besonders bevorzugt ist ein Gemisch aus Glimmerfraktionen von N-Glimmer (10-60 µm), F-Glimmer (5-20 µm) und/oder M-Glimmer (<15 µm). Weiterhin bevorzugt sind N- und S-Fraktionen (10-130 µm) und F- und S-Fraktionen (5-130 µm).

Typische Beispiele für Teilchengrößenverteilungen (bestimmt mit Malvern Mastersizer 2000) sind:
- D₁₀:: 1 - 50 µm, insbesondere 2 - 45 µm, ganz besonders bevorzugt 5-40 µm
- D₅₀:: 7 - 275 µm, insbesondere 10 - 200 µm, ganz besonders bevorzugt 15-150 µm
- D₉₀:: 15 - 500 µm, insbesondere 25 - 400 µm, ganz besonders bevorzugt 50-200 µm.

In dieser Patentanmeldung bedeutet "hochbrechend" ein Brechungsindex von ≥ 1,8, während "niedrigbrechend" ein Brechungsindex von < 1,8 bedeutet.

Die Schichtenfolge (A)-(E) bzw. (A)-(F) des erfindungsgemäßen Effektpigments ist wesentlich für die Stabilität des Pigments und die optischen Eigenschaften.

Bei der Schicht (A) handelt es sich um eine hochbrechende Schicht mit einem Brechungsindex von n ≥ 1,8, vorzugsweise n ≥ 2,0. Die Schicht (A) kann farblos oder im sichtbaren Wellenlicht absorbierend sein. Vorzugsweise besteht die Schicht (A) aus Metalloxiden oder Metalloxidgemischen. Das Metalloxid ist vorzugsweise ausgewählt aus der Gruppe TiO₂, ZrO₂, ZnO, SnO₂, Cr₂O₃, Ce₂O₃, BiOCl, Fe₂O₃, Fe₃O₄, FeO(OH), Ti-Suboxiden (TiO₂ teilweise reduziert mit Oxidationszahlen von <4 bis 2 und niedere Oxide wie z.B. Ti₃O₅, Ti₂O₃ bis zu TiO), Titanoxynitride sowie Titannitrid, CoO, Co₂O₃, Co₃O₄, VO₂, V₂O₃, NiO, WO3, MnO, Mn₂O₃ oder Gemische der genannten Oxide. Vorzugsweise besteht die Schicht (A) aus TiO₂, Fe₂O₃, Cr₂O₃ oder SnO₂.

Die Schicht (A) weist vorzugsweise Schichtdicken von 1-15 nm, insbesondere von 1-10 nm und ganz besonders bevorzugt von 1-5 nm auf.

Die Pseudobrookit-Schichten (B) und (E) können gleich oder verschieden sein. Vorzugsweise sind die Schichten von der Zusammensetzung her identisch. Die Pseudobrookit-Schichten bestehen vorzugsweise vollständig aus Fe₂TiO₅. Das Fe₂TiO₅ kann jedoch durch leichte Variationen des Fe/Ti-Verhältnisses und daraus resultierende Gitterleerstellen leicht über- oder unterstöchiometrisch sein.

Die Schichten können durch gleichzeitige Zugabe und Fällung einer Fehaltigen und einer Ti-haltigen Salzlösung oder durch Co-Fällung aus einer einzigen Lösung enthaltend Fe- und Ti-Salze hergestellt werden.

Die Pseudobrookit-Schichten sollten vorzugsweise zu 100 % aus kristallinem Pseudobrookit bestehen.

Die Schichten (B) und (E) und können gegebenenfalls zur Erhöhung der Stabilität und/oder Farbstärke noch mit ein oder mehreren Oxiden oder Oxidgemischen, vorzugsweise Metalloxide, dotiert sein. Die Oxide sind vorzugsweise ausgewählt aus der Gruppe Al₂O₃, Ce₂O₃, B₂O₃, ZrO₂, SnO₂, Cr₂O₃, CoO, Co₂O₃, Co₃O₄, Mn₂O₃. Der Gewichtsanteil des Oxids bzw. Oxidgemisches in der Pseudobrookit-Schicht beträgt vorzugsweise nicht mehr als 5 Gew.% und liegt insbesondere im Bereich von 1 -5 Gew.%, ganz besonders bevorzugt 1 - 3 Gew.%, bezogen auf die Schicht (B) bzw. Schicht (E).

Die Schichten (B) und (E) besitzen jeweils unabhängig voneinander Schichtdicken vorzugsweise im Bereich von 60 - 120 nm, insbesondere 70 - 110 nm, und ganz besonders bevorzugt von 80 - 100 nm.

Für die Stabilität der erfindungsgemäßen Effektpigmente ist es insbesondere wichtig, dass die Schichten (B) und (E) durch eine Separationsschicht (C) und eine Separationsschicht (D) voneinander getrennt sind. Der Abstand zwischen den Schichten (B) und (E) sollte vorzugsweise 40-100 nm, insbesondere 45-90 nm und ganz besonders bevorzugt 50-80 nm betragen.

Die niedrigbrechende Schicht (C) mit einem Brechungsindex von n < 1,8, vorzugsweise n < 1,7, besteht vorzugsweise aus SiO₂, MgO*SiO₂, CaO*SiO₂, Al₂O₃*SiO₂, B₂O₃*SiO₂ oder aus einem Gemisch der genannten Verbindungen. Weiterhin kann die Silikatschicht mit weiteren Erdalkali- oder Alkaliionen dotiert sein. Vorzugsweise handelt es sich bei der Schicht (C) um eine "silikatische" Schicht. Ganz besonders bevorzugt besteht die Schicht (C) aus dotiertem oder undotiertem SiO₂.

Die Schicht (C) weist vorzugsweise Schichtdicken von 40-90 nm, insbesondere von 40 - 70 nm und ganz besonders bevorzugt von 50 - 60 nm auf.

Die hochbrechende Beschichtung der Schicht (D) mit einem Brechungsindex von n ≥ 1,8, vorzugsweise n ≥ 2,0, besteht aus mindestens zwei farblosen Metalloxidschichten. Vorzugsweise besteht die Schicht (D) aus 2 oder 3 farblosen Metalloxidschichten. Die Metalloxide sind vorzugsweise ausgewählt aus der Gruppe SnO₂, TiO₂, Al₂O₃, Fe₂O₃, Cr₂O₃ oder deren Gemische.

Vorzugsweise besteht die Beschichtung der Schicht (D) aus den Metalloxidschichten (D1) und (D2)
- (D1): SnO₂-Schicht
- (D2): TiO₂-Schicht
oder
aus den Metalloxidschichten (D1), (D2) und (D3)
- (D1): Al₂O₃-Schicht
- (D2): TiO₂-Schicht
- (D3): Al₂O₃-Schicht
oder
- (D1): SnO₂-Schicht
- (D2): TiO₂-Schicht
- (D3): SnO₂-Schicht.

Die Beschichtung der Schicht (D) weist vorzugsweise Schichtdicken von 10-25 nm, insbesondere von 11-21 nm und ganz besonders bevorzugt von 12-17 nm auf. Die Summe aller Schichtdicken der einzelnen Metalloxidschichten (D1), (D2), (D3) und ggf. weiterer Schichten der Beschichtung der Schicht (D) sollte 25 nm nicht übersteigen.

Damit die Schichten (C) und (D) als Separationsschichten agieren können und damit zur verminderten Phasenreaktion zwischen den einzelnen Pseudobrookit-Schichten (B) und (E) beitragen, sollte die Gesamtschichtdicke der Schichten (C) und (D) den Dickenbereich von 120 nm nicht übersteigen und vorzugsweise im Bereich 50-115 nm, insbesondere 51-91 nm und ganz besonders bevorzugt von 62-77 nm liegen.

Sofern die Schicht (A) bzw. (D) aus TiO₂ besteht, kann das TiO₂ in der Rutil- oder in der Anatasmodifikation vorliegen.

Besonders bevorzugte Effektpigmente besitzen folgenden Aufbau:
- Substrat + TiO₂ + Pseudobrookit + SiO₂ + SnO₂ + TiO₂ + SnO₂ + Pseudobrookit
- Substrat + Fe₂O₃ + Pseudobrookit + SiO₂ + SnO₂ + TiO₂ + SnO₂ + Pseudobrookit
- Substrat + Cr₂O₃ + Pseudobrookit + SiO₂ + SnO₂ + TiO₂ + SnO₂ + Pseudobrookit
- Substrat + TiO₂ + Pseudobrookit + MgO*SiO₂ + SnO₂ + TiO₂ + SnO₂ + Pseudobrookit
- Substrat + Fe₂O₃ + Pseudobrookit + MgO*SiO₂ + SnO₂ + TiO₂ + SnO₂ + Pseudobrookit
- Substrat + Cr₂O₃ + Pseudobrookit + MgO*SiO₂ + SnO₂ + TiO₂ + SnO₂ + Pseudobrookit
- Substrat + TiO₂ + Pseudobrookit + CaO*SiO₂ + SnO₂ + TiO₂ + SnO₂ + Pseudobrookit
- Substrat + Fe₂O₃ + Pseudobrookit + CaO*SiO₂ + SnO₂ + TiO₂ + SnO₂ + Pseudobrookit
- Substrat + Cr₂O₃ + Pseudobrookit + CaO*SiO₂ + SnO₂ + TiO₂ + SnO₂ + Pseudobrookit
- Substrat + TiO₂ + Pseudobrookit + Al₂O₃*SiO₂ + SnO₂ + TiO₂ + SnO₂ + Pseudobrookit
- Substrat + Fe₂O₃ + Pseudobrookit + Al₂O₃*SiO₂ + SnO₂ + TiO₂ + SnO₂ + Pseudobrookit
- Substrat + Cr₂O₃ + Pseudobrookit + Al₂O₃*SiO₂ + SnO₂ + TiO₂ + SnO₂ + Pseudobrookit
- Substrat + TiO₂ + Pseudobrookit + SiO₂ + TiO₂ + SnO₂ + Pseudobrookit
- Substrat + TiO₂ + Pseudobrookit + SiO₂ + SnO₂ + TiO₂ + Pseudobrookit
- Substrat + TiO₂ + Pseudobrookit + SiO₂ + TiO₂ + SnO₂ + Pseudobrookit + SnO₂
- Substrat + TiO₂ + Pseudobrookit + SiO₂ + SnO₂ + TiO₂ + Pseudobrookit + SnO₂
- Substrat + TiO₂ + Pseudobrookit + SiO₂ + SnO₂ + Fe₂O₃ + SnO₂ + Pseudobrookit
- Substrat + TiO₂ + Pseudobrookit + SiO₂ + SnO₂ + Cr₂O₃ + SnO₂ + Pseudobrookit
- Substrat + TiO₂ + Pseudobrookit + SiO₂ + Al₂O₃ + TiO₂ + Al₂O₃ + Pseudobrookit

Ganz besonders bevorzugte Effektpigmente besitzen folgenden Schichtaufbau:
- natürliche Glimmerplättchen + TiO₂ + Pseudobrookit + SiO₂ + SnO₂ + TiO₂ + SnO₂ + Pseudobrookit
- natürliche Glimmerplättchen + Fe₂O₃ + Pseudobrookit + SiO₂ + SnO₂ + TiO₂ + SnO₂ + Pseudobrookit
- natürliche Glimmerplättchen + Cr₂O₃ + Pseudobrookit + SiO₂ + SnO₂ + TiO₂ + SnO₂ + Pseudobrookit
- natürliche Glimmerplättchen + TiO₂ + Pseudobrookit + MgO*SiO₂ + SnO₂ + TiO₂ + SnO₂ + Pseudobrookit
- natürliche Glimmerplättchen + Fe₂O₃ + Pseudobrookit + MgO*SiO₂ + SnO₂ + TiO₂ + SnO₂ + Pseudobrookit
- natürliche Glimmerplättchen + Cr₂O₃ + Pseudobrookit + MgO*SiO₂ + SnO₂ + TiO₂ + SnO₂ + Pseudobrookit
- natürliche Glimmerplättchen + TiO₂ + Pseudobrookit + CaO*SiO₂ + SnO₂ + TiO₂ + SnO₂ + Pseudobrookit
- natürliche Glimmerplättchen + Fe₂O₃ + Pseudobrookit + CaO*SiO₂ + SnO₂ + TiO₂ + SnO₂ + Pseudobrookit
- natürliche Glimmerplättchen + Cr₂O₃ + Pseudobrookit + CaO*SiO₂ + SnO₂ + TiO₂ + SnO₂ + Pseudobrookit
- natürliche Glimmerplättchen + TiO₂ + Pseudobrookit + Al₂O₃*SiO₂ + SnO₂ + TiO₂ + SnO₂ + Pseudobrookit
- natürliche Glimmerplättchen + Fe₂O₃ + Pseudobrookit + Al₂O₃*SiO₂ + SnO₂ + TiO₂ + SnO₂ + Pseudobrookit
- natürliche Glimmerplättchen + Cr₂O₃ + Pseudobrookit + Al₂O₃*SiO₂ + SnO₂ + TiO₂ + SnO₂ + Pseudobrookit
- natürliche Glimmerplättchen + TiO₂ + Pseudobrookit + SiO₂ + TiO₂ + SnO₂ + Pseudobrookit
- natürliche Glimmerplättchen + TiO₂ + Pseudobrookit + SiO₂ + SnO₂ + TiO₂ + Pseudobrookit
- natürliche Glimmerplättchen + TiO₂ + Pseudobrookit + SiO₂ + TiO₂ + SnO₂ + Pseudobrookit + SnO₂
- natürliche Glimmerplättchen + TiO₂ + Pseudobrookit + SiO₂ + SnO₂ + TiO₂ + Pseudobrookit + SnO₂
- natürliche Glimmerplättchen + TiO₂ + Pseudobrookit + SiO₂ + SnO₂ + Fe₂O₃ + SnO₂ + Pseudobrookit
- natürliche Glimmerplättchen + TiO₂ + Pseudobrookit + SiO₂ + SnO₂ + Cr₂O₃ + SnO₂ + Pseudobrookit
- natürliche Glimmerplättchen + TiO₂ + Pseudobrookit + SiO₂ + Al₂O₃ + TiO₂ + Al₂O₃ + Pseudobrookit
- synthetische Glimmerplättchen + TiO₂ + Pseudobrookit + SiO₂ + SnO₂ + TiO₂ + SnO₂ + Pseudobrookit
- synthetische Glimmerplättchen + Fe₂O₃ + Pseudobrookit + SiO₂ + SnO₂ + TiO₂ + SnO₂ + Pseudobrookit
- synthetische Glimmerplättchen + Cr₂O₃ + Pseudobrookit + SiO₂ + SnO₂ + TiO₂ + SnO₂ + Pseudobrookit
- synthetische Glimmerplättchen + TiO₂ + Pseudobrookit + MgO*SiO₂ + SnO₂ + TiO₂ + SnO₂ + Pseudobrookit
- synthetische Glimmerplättchen + Fe₂O₃ + Pseudobrookit + MgO*SiO₂ + SnO₂ + TiO₂ + SnO₂ + Pseudobrookit
- synthetische Glimmerplättchen + Cr₂O₃ + Pseudobrookit + MgO*SiO₂ + SnO₂ + TiO₂ + SnO₂ + Pseudobrookit
- synthetische Glimmerplättchen + TiO₂ + Pseudobrookit + CaO*SiO₂ + SnO₂ + TiO₂ + SnO₂ + Pseudobrookit
- synthetische Glimmerplättchen + Fe₂O₃ + Pseudobrookit + CaO*SiO₂ + SnO₂ + TiO₂ + SnO₂ + Pseudobrookit
- synthetische Glimmerplättchen + Cr₂O₃ + Pseudobrookit + CaO*SiO₂ + SnO₂ + TiO₂ + SnO₂ + Pseudobrookit
- synthetische Glimmerplättchen + TiO₂ + Pseudobrookit + Al₂O₃*SiO₂ + SnO₂ + TiO₂ + SnO₂ + Pseudobrookit
- synthetische Glimmerplättchen + Fe₂O₃ + Pseudobrookit + Al₂O₃*SiO₂ + SnO₂ + TiO₂ + SnO₂ + Pseudobrookit
- synthetische Glimmerplättchen + Cr₂O₃ + Pseudobrookit + Al₂O₃*SiO₂ + SnO₂ + TiO₂ + SnO₂ + Pseudobrookit
- synthetische Glimmerplättchen + TiO₂ + Pseudobrookit + SiO₂ + TiO₂ + SnO₂ + Pseudobrookit
- synthetische Glimmerplättchen + TiO₂ + Pseudobrookit + SiO₂ + SnO₂ + TiO₂ + Pseudobrookit
- synthetische Glimmerplättchen + TiO₂ + Pseudobrookit + SiO₂ + TiO₂ + SnO₂ + Pseudobrookit + SnO₂
- synthetische Glimmerplättchen + TiO₂ + Pseudobrookit + SiO₂ + SnO₂ + TiO₂ + Pseudobrookit + SnO₂
- synthetische Glimmerplättchen + TiO₂ + Pseudobrookit + SiO₂ + SnO₂ + Fe₂O₃ + SnO₂ + Pseudobrookit
- synthetische Glimmerplättchen + TiO₂ + Pseudobrookit + SiO₂ + SnO₂ + Cr₂O₃ + SnO₂ + Pseudobrookit
- synthetische Glimmerplättchen + TiO₂ + Pseudobrookit + SiO₂ + Al₂O₃ + TiO₂ + Al₂O₃ + Pseudobrookit
- Al₂O₃-Plättchen + TiO₂ + Pseudobrookit + SiO₂ + SnO₂ + TiO₂ + SnO₂ + Pseudobrookit
- Al₂O₃-Plättchen + Fe₂O₃ + Pseudobrookit + SiO₂ + SnO₂ + TiO₂ + SnO₂ + Pseudobrookit
- Al₂O₃-Plättchen + Cr₂O₃ + Pseudobrookit + SiO₂ + SnO₂ + TiO₂ + SnO₂ + Pseudobrookit
- Al₂O₃-Plättchen + TiO₂ + Pseudobrookit + MgO*SiO₂ + SnO₂ + TiO₂ + SnO₂ + Pseudobrookit
- Al₂O₃-Plättchen + Fe₂O₃ + Pseudobrookit + MgO*SiO₂ + SnO₂ + TiO₂ + SnO₂ + Pseudobrookit
- Al₂O₃-Plättchen + Cr₂O₃ + Pseudobrookit + MgO*SiO₂ + SnO₂ + TiO₂ + SnO₂ + Pseudobrookit
- Al₂O₃-Plättchen + TiO₂ + Pseudobrookit + CaO*SiO₂ + SnO₂ + TiO₂ + SnO₂ + Pseudobrookit
- Al₂O₃-Plättchen + Fe₂O₃ + Pseudobrookit + CaO*SiO₂ + SnO₂ + TiO₂ + SnO₂ + Pseudobrookit
- Al₂O₃-Plättchen + Cr₂O₃ + Pseudobrookit + CaO*SiO₂ + SnO₂ + TiO₂ + SnO₂ + Pseudobrookit
- Al₂O₃-Plättchen + TiO₂ + Pseudobrookit + Al₂O₃*SiO₂ + SnO₂ + TiO₂ + SnO₂ + Pseudobrookit
- Al₂O₃-Plättchen + Fe₂O₃ + Pseudobrookit + Al₂O₃*SiO₂ + SnO₂ + TiO₂ + SnO₂ + Pseudobrookit
- Al₂O₃-Plättchen + Cr₂O₃ + Pseudobrookit + Al₂O₃*SiO₂ + SnO₂ + TiO₂ + SnO₂ + Pseudobrookit
- Al₂O₃-Plättchen + TiO₂ + Pseudobrookit + SiO₂ + TiO₂ + SnO₂ + Pseudobrookit
- Al₂O₃-Plättchen + TiO₂ + Pseudobrookit + SiO₂ + SnO₂ + TiO₂ + Pseudobrookit
- Al₂O₃-Plättchen + TiO₂ + Pseudobrookit + SiO₂ + TiO₂ + SnO₂ + Pseudobrookit + SnO₂
- Al₂O₃-Plättchen + TiO₂ + Pseudobrookit + SiO₂ + SnO₂ + TiO₂ + Pseudobrookit + SnO₂
- Al₂O₃-Plättchen + TiO₂ + Pseudobrookit + SiO₂ + SnO₂ + Fe₂O₃ + SnO₂ + Pseudobrookit
- Al₂O₃-Plättchen + TiO₂ + Pseudobrookit + SiO₂ + SnO₂ + Cr₂O₃ + SnO₂ + Pseudobrookit
- Al₂O₃-Plättchen + TiO₂ + Pseudobrookit + SiO₂ + Al₂O₃ + TiO₂ + Al₂O₃ + Pseudobrookit
- SiO₂-Plättchen + TiO₂ + Pseudobrookit + SiO₂ + SnO₂ + TiO₂ + SnO₂ + Pseudobrookit
- SiO₂-Plättchen + Fe₂O₃ + Pseudobrookit + SiO₂ + SnO₂ + TiO₂ + SnO₂ + Pseudobrookit
- SiO₂-Plättchen + Cr₂O₃ + Pseudobrookit + SiO₂ + SnO₂ + TiO₂ + SnO₂ + Pseudobrookit
- SiO₂-Plättchen + TiO₂ + Pseudobrookit + MgO*SiO₂ + SnO₂ + TiO₂ + SnO₂ + Pseudobrookit
- SiO₂-Plättchen + Fe₂O₃ + Pseudobrookit + MgO*SiO₂ + SnO₂ + TiO₂ + SnO₂ + Pseudobrookit
- SiO₂-Plättchen + Cr₂O₃ + Pseudobrookit + MgO*SiO₂ + SnO₂ + TiO₂ + SnO₂ + Pseudobrookit
- SiO₂-Plättchen + TiO₂ + Pseudobrookit + CaO*SiO₂ + SnO₂ + TiO₂ + SnO₂ + Pseudobrookit
- SiO₂-Plättchen + Fe₂O₃ + Pseudobrookit + CaO*SiO₂ + SnO₂ + TiO₂ + SnO₂ + Pseudobrookit
- SiO₂-Plättchen + Cr₂O₃ + Pseudobrookit + CaO*SiO₂ + SnO₂ + TiO₂ + SnO₂ + Pseudobrookit
- SiO₂-Plättchen + TiO₂ + Pseudobrookit + Al₂O₃*Si0₂ + SnO₂ + TiO₂ + SnO₂ + Pseudobrookit
- SiO₂-Plättchen + Fe₂O₃ + Pseudobrookit + Al₂O₃*SiO₂ + SnO₂ + TiO₂ + SnO₂ + Pseudobrookit
- SiO₂-Plättchen + Cr₂O₃ + Pseudobrookit + Al₂O₃*SiO₂ + SnO₂ + TiO₂ + SnO₂ + Pseudobrookit
- SiO₂-Plättchen + TiO₂ + Pseudobrookit + SiO₂ + TiO₂ + SnO₂ + Pseudobrookit
- SiO₂-Plättchen + TiO₂ + Pseudobrookit + SiO₂ + SnO₂ + TiO₂ + Pseudobrookit
- SiO₂-Plättchen + TiO₂ + Pseudobrookit + SiO₂ + TiO₂ + SnO₂ + Pseudobrookit + SnO₂
- SiO₂-Plättchen + TiO₂ + Pseudobrookit + SiO₂ + SnO₂ + TiO₂ + Pseudobrookit + SnO₂
- SiO₂-Plättchen + TiO₂ + Pseudobrookit + SiO₂ + SnO₂ + Fe₂O₃ + SnO₂ + Pseudobrookit
- SiO₂-Plättchen + TiO₂ + Pseudobrookit + SiO₂ + SnO₂ + Cr₂O₃ + SnO₂ + Pseudobrookit
- SiO₂-Plättchen + TiO₂ + Pseudobrookit + SiO₂ + Al₂O₃ + TiO₂ + Al₂O₃ + Pseudobrookit

Die Metalloxidschicht(en) werden vorzugsweise naßchemisch aufgebracht, wobei die zur Herstellung von Perlglanzpigmenten entwickelten naßchemischen Beschichtungsverfahren angewendet werden können; Derartige Verfahren sind z. B. beschrieben in U.S. 3087828, U.S. 3087829, U.S. 3553001, DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017, DE 196 18 568, EP 0 659 843, oder auch in weiteren dem Fachmann bekannten Patentdokumenten und sonstigen Publikationen.

Bei der Naßbeschichtung werden die Substratplättchen in Wasser suspendiert und mit einem oder mehreren hydrolysierbaren Metallsalzen bei einem für die Hydrolyse geeigneten pH-Wert versetzt, der so gewählt wird, dass die Metalloxide bzw. Metalloxidhydrate direkt auf den Plättchen ausgefällt werden, ohne dass es zu Nebenfällungen kommt. Der pH-Wert wird üblicherweise durch gleichzeitiges Zudosieren einer Base und/oder Säure konstant gehalten. Anschließend werden die Effektpigmente abgetrennt, gewaschen und getrocknet und gegebenenfalls geglüht, wobei die Glühtemperatur im Hinblick auf die jeweils vorliegende Beschichtung optimiert werden kann. In der Regel liegen die Glühtemperaturen zwischen 250 und 1000 °C, vorzugsweise zwischen 350 und 900 °C. Falls gewünscht kann das Pigment nach dem Aufbringen einzelner Beschichtungen abgetrennt, getrocknet und ggf. geglüht werden, um dann zur Auffällung der weiteren Schichten wieder resuspendiert zu werden.

Für das Aufbringen einer SiO₂-Schicht wird bevorzugt das in der DE 196 18 569 beschriebene Verfahren verwendet. Zur Herstellung der SiO₂-Schicht wird vorzugsweise Natrium- oder Kaliumwasserglaslösung eingesetzt.

Weiterhin kann die Beschichtung auch in einem Wirbelbettreaktor durch Gasphasenbeschichtung erfolgen, wobei z.B. die in EP 0 045 851 und EP 0 106 235 zur Herstellung von Perlglanzpigmenten vorgeschlagenen Verfahren entsprechend angewendet werden können.

Der Farbton der Pigmente kann in weiten Grenzen durch unterschiedliche Wahl der Belegungsmengen bzw. der daraus resultierenden Schichtdicken variiert werden. Die Feinabstimmung für einen bestimmten Farbton kann über die reine Mengenwahl hinaus durch visuell oder meßtechnisch kontrolliertes Anfahren der gewünschten Farbe erreicht werden.

Zur Erhöhung der Licht-, Wasser- und Wetterstabilität empfiehlt es sich häufig, in Abhängigkeit vom Einsatzgebiet das erfindungsgemäße Effektpigment einer anorganischen oder organischen Nachbeschichtung oder Nachbehandlung zu unterziehen (Schicht (F)). Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung wird die chemische und photochemische Stabilität weiter erhöht oder die Handhabung des Effektpigments, insbesondere die Einarbeitung in unterschiedliche Medien erleichtert. Zur Verbesserung der Benetzbarkeit, Dispergierbarkeit und/oder Verträglichkeit mit den Anwendermedien können funktionelle Beschichtungen aus SnO₂, Al₂O₃ oder ZrO₂ oder deren Gemische auf die Pigmentoberfläche aufgebracht werden. Weiterhin sind organische Nachbeschichtungen möglich, z.B. mit Silanen, wie beispielsweise beschrieben in der EP 0090259, EP 0 634 459, WO 99/57204, WO 96/32446, WO 99/57204, U.S. 5,759,255, U.S. 5,571,851, WO 01/92425 oder in J.J. Ponjeé, Philips Technical Review, Vol. 44, No. 3, 81 ff. und P.H. Harding J.C. Berg, J. Adhesion Sci. Technol. Vol. 11 No. 4, S. 471-493. Vorzugsweise handelt es sich bei der Schicht (F) um eine Schicht aus SnO₂.

Unter Beschichtung(en) sind in dieser Patentanmeldung die vollständige Belegung/Umhüllung der plättchenförmigen Substrate zu verstehen.

Die optimale Orientierung der Farbkörper in der Glasur wird durch die alkalischen Komponenten K₂O und Na₂O in der Fritte unterstützt. Je höher der Pigmentanteil in der Fritte ist, vorzugsweise > 30 Gew.%, desto besser wird die gewünschte Orientierung der Farbkörper unterstützt. Der Effekt steigt dabei in der Regel mit zunehmender Pigmentkonzentration sukzessive von ≥ 30 Gew.%, über ≥ 50 Gew.% bis hin zu ≥ 70 Gew.% an.

Neben der optimalen Ausrichtung der Farbkörper spielt weiterhin die Temperaturstabilität sowie die Stabilität gegenüber chemisch hochreaktivem Medium (der Frittenschmelze) eine entscheidende Rolle für den Einsatz des Pigment/Fritten-Gemisches.

Die Stabilität des Pigment/Fritten-Gemisches bei Einsatztemperaturen von ≤ 950 °C, vorzugsweise 720-950 °C, wird auch durch die chemische Reaktivität des Mediums beeinflusst. Es hat sich gezeigt, dass nur Fritten, die ein genau definiertes Verhältnis der Basiskomponenten Al₂O₃ und Si₂O₃ und der Flussbildner B₂O₃, Na₂O und K₂O aufweisen, und zwar gemäß der Summenformel (in Gew.-%) Al₂O₃ + Si₂O₃ - B₂O₃ - Na₂O - K₂O = 20-50 Gew.%, geeignet sind.

Geeignete kommerziell erhältliche Fritten enthalten neben Al₂O₃, SiO₂, B₂O₃, Na₂O und K₂O Bestandteile, wie z.B., TiO₂, ZrO₂, ZnO, Sb₂O₃, P₂O₅, Hf₂O, MnO, Cr₂O₃, Fe₂O₃, PbO, Li₂O, Erdalkalioxide, wie z.B. CaO, BaO, MgO, SrO, und Oxide Seltener Erden.

Bevorzugte Fritten enthalten
- SiO₂ + Al₂O₃ = 50-70 Gew.%
- B₂O₃ + Na₂O + K₂O = 15-35 Gew.%
wobei der Gesamtanteil aller Bestandteile der Fritte 100 % beträgt.

Als weitere Bestandteile können die Frittengemische 0-10 Gew.% Additive bezogen auf das Pigment/Fritten-Gemisch enthalten, wie z.B. anorganische Farbpigmente, Ton, Kaolin, Bentonit oder organische Substanzen, z.B. zur Einstellung der Stabilität des Glasurschlickers.

Die Teilchen der Fritten besitzen vorzugsweise Partikelgrößen von 1 - 20 µm, insbesondere 3 - 15 µm und ganz besonders bevorzugt von 5 - 12 µm.

Geeignete Fritten/Flüsse mit einem Anteil SiO₂ + Al₂O₃ = 50-70 Gew.% und einem Anteil von B₂O₃ + Na₂O + K₂O = 15-35 Gew.% bezogen auf die Fritte sind kommerziell erhältlich, z.B. von Ferro, Sicer, Colorobbia oder Izawa. Als Beispiel, ohne dabei die Anzahl der einsetzbaren Fritten/Flüsse einzuschränken, werden nachfolgende Fritten genannt:
Ferro 107810, Ferro 1055070, Colorobbia GVFK5003

Das Pigment-Fritten-Gemisch eignet sich zur Dekoration keramischer Gegenstände auf der Basis von Porzellan, Bone-China und Steingut.

Geeignete Werkstücke für das erfindungsgemäße Pigment-/Fritten-Gemisch werden in der nachfolgenden Tabelle genannt:

| **ungebrannt** | **vorgebrannt (Biskuit)** | **mit Engobe** | **glasiert** | **gebrannt** |
|---|---|---|---|---|
| Feinsteinzeugfliese | Feinsteinzeugfliese | Feinsteinzeugfliese | Feinsteinzeugfliese | Feinsteinzeugfliese |
| Steinzeugfliese | Steinzeugfliese | Steinzeugfliese | Steinzeugfliese | Steinzeugfliese |
| Steingutfliese | Steingutfliese | Steingutfliese | Steingutfliese | Steingutfliese |
| Hartporzellan | Hartporzellan | Hartporzellan | Hartporzellan | Hartporzellan |
| Weichporzellan | Weichporzellan | Weichporzellan | Weichporzellan | Weichporzellan |
| Fine China | Fine China | Fine China | Fine China | Fine China |
| Bone China | Bone China | Bone China | Bone China | Bone China |
| Biskuitporzellan | Biskuitporzellan | Biskuitporzellan | Biskuitporzellan | Biskuitporzellan |
| Steinzeugporzellan | Steinzeugporzellan | Steinzeugporzellan | Steinzeugporzellan | Steinzeugporzellan |
| Steingutporzellan | Steingutporzellan | Steingutporzellan | Steingutporzellan | Steingutporzellan |

Die Applikation des erfindungsgemäßen Pigment-/Fritten-Gemisches auf das Werkstück kann beispielsweise erfolgen durch
- Rotativen Siebdruck direkt
- Flach-Siebdruck direkt
- Rotativer Siebdruck indirekt über Abziehbilder
- flach-Siebdruck indirekt über Abziehbilder
- Rotocolor
- Sprühapplikation
- (Hand-)Malerei
- Tauchen
- Wasserfall
- Airless-Sprühapplikation
- jegliche Applikationen mit Dekorationspulver (z.B. grit Vetrosa), z.B. vorgedruckter Kleber, anschließend mit Dekorationspulver überstreut und zum Schluss abgesaugt oder -geblasen.

Einen besonders ausgeprägten Liquid-Metal-Effekt erzielt man, wenn die im Pigment-Fritten-Gemisch verwendete Fritte oder eine in Zusammensetzung und Schmelzverhalten ähnliche Fritte als Zwischenschicht (sogenanntes "Underlay") zwischen Keramik bzw. Glasur und Pigment-Frittengemisch aufgetragen wird. Beide Schichten, Underlay und Pigment-Fritten-Gemisch, werden separat appliziert, dann aber gemeinsam eingebrannt.

Underlay und Pigment-Fritten-Gemisch können beispielsweise durch Spritzapplikation, Pinselapplikation, Rakeln, Siebdruck und Abziehbilder auf die glasierte oder unglasierte Keramikoberfläche aufgetragen werden. Die nach dem Einbrand gemessenen Gesamtschichtdicken liegen applikationsabhängig zwischen 5 und 30 µm.

Die Einbrenntemperaturen variieren mit den verwendeten Fritten. Typische Einbrenntemperaturen für das erfindungsgemäße Pigment-Fritten-Gemisch liegen im Bereich von ≤ 950 °C, vorzugsweise 700 °C bis 950 °C.

Zur Variation des Farbtons können dem erfindungsgemäßen Pigment/Fritten-Gemisch stabile anorganische Farbpigmente oder Farbpigmente zugesetzt werden. Der Anteil der Farbpigmente beträgt 0 - 30 Gew.%, insbesondere 0 - 15 Gew. % und ganz besonders bevorzugt 0 - 10 Gew. % bezogen auf das Pigment/Fritten-Gemisch. Geeignete und stabile Farbpigmente sind beispielsweise grüne Chromoxidpigmente, schwarze Spinell-Pigmente, Gelbbraune Rutilpigmente, Cadmiumrot und -gelb, Cobaltblau-Pigmente. Derartige Farbpigmente sind beispielsweise bei den Firmen Ferro und Shepard kommerziell erhältlich.

Die eingebrannten Effektglasuren mit dem erfindungsgemäßen Pigment/Fritten-Gemisch zeichnen sich durch einen besonders hohen Glanz in Kombination mit niedrigen Sparkle-Werten aus und zeigen den gewünschten Liquid Metall-Effekt.

Gegenstand der vorliegenden Erfindung sind auch Formulierungen enthaltend das erfindungsgemäße Pigment/Fritten-Gemisch, die folgende Glanzwerte aufweisen (bestimmt mit Goniophotometer Rhopoint IQ mini 2.0): Glanz (20°) > 20
Haze ≥ 30.

Gegenstand der Erfindung ist auch die Verwendung des erfindungsgemäßen Pigment/Fritten-Gemisches für Keramikglasuren auf gebrannten oder ungebrannten Ziegeln, Boden- und Wandfliesen für Innen- oder Außenanwendung, Sanitärkeramik, Porzellan, Ton- und Keramikwaren. Gegenstand der Erfindung sind somit auch Formulierungen enthaltend das erfindungsgemäße Effektpigment/Fritten-Gemisch.

Die nachfolgenden Beispiele sollen die Erfindung erläutern, ohne sie jedoch zu begrenzen.

### Beispiele

### Beispiel 1

100 g natürlicher Glimmer der Teilchengröße 10-60 µm werden in 2 l entmineralisiertem Wasser unter Rühren auf 80 °C erhitzt. Nach Erreichen dieser Temperatur wird bei pH 1,8 44 g TiCl₄-Lösung (400 g/l TiCl₄) zudosiert, wobei der pH-Wert mit 32 %iger Natronlauge konstant gehalten wird. Anschließend wird der pH-Wert mittels Natronlauge auf pH 2,8 eingestellt und bei diesem pH-Wert und 75 °C gleichzeitig 600 ml einer wässrigen FeCl₃-Lösung (w(Fe)= 7 %) und 462 ml einer wässrigen TiCl₄-Lösung (200 g TiCl₄/l) zugegeben. Während der gesamten Zugabezeit wird der pH-Wert durch gleichzeitiges Zutropfen einer 32 %igen Natronlauge konstant gehalten. Nach 0,5 h Nachrühren wird der pH-Wert auf 7,5 angehoben und bei diesem pH-Wert werden 650 ml Natronwasserglaslösung (13 Gew.% SiO₂) langsam zudosiert, wobei der pH-Wert mit 10 %iger Salzsäure konstant gehalten wird. Nach einer weiteren Nachrührzeit von 0,5 h wird der pH-Wert mit 10 %iger Salzsäure auf pH 1,8 abgesenkt und eine Lösung aus 5 g SnCl₄ x 5 H₂O und 41 ml Salzsäure (20 %) zudosiert. Beim gleichen pH-Wert werden nun 105 ml TiCl₄-Lösung(400 g/l TiCl₄) langsam zudosiert. Nun folgt eine erneute Zugabe eine Lösung bestehend aus 5 g SnCl₄ x 5 H₂O und 41 ml Salzsäure (20 %). Der pH-Wert wird jeweils mit 32 %iger Natronlauge konstant bei 1,8 gehalten. Im Anschluss wird der pH-Wert wieder mittels Natronlauge auf pH 2,8 eingestellt. Die äußerste Schicht wird abschließend durch parallele Zugabe von 650 ml einer wässrigen FeCl₃-Lösung (w(Fe) = 7 %) und 499 ml einer wässrigen TiCl₄-Lösung (200 g TiCl₄/I) und gleichzeitiges Titrieren mit Natronlauge (w=10 %) aufgebracht. Nach einer Nachrührzeit von 0,5 h bei pH 3,0 wird das beschichtete Glimmersubstrat abfiltriert, gewaschen und bei 110 °C 16 h getrocknet. Zuletzt wird das erhaltene Effektpigment 0,5 h bei 850 °C geglüht und gesiebt.

Man erhält ein temperaturstabiles goldenes Mehrschichtpigment mit hoher Brillianz.

### Beispiel 2

100 g natürlicher Glimmer der Teilchengröße 10-25 µm werden in 2 l entmineralisiertem Wasser unter Rühren auf 80 °C erhitzt. Nach Erreichen dieser Temperatur wird bei pH 1,8 44 g TiCl₄-Lösung (400 g/l TiCl₄) zudosiert, wobei der pH-Wert mit 32 %iger Natronlauge konstant gehalten wird. Anschließend wird der pH-Wert mittels Natronlauge auf pH 2,8 eingestellt und bei diesem pH-Wert und 75 °C gleichzeitig 600 ml einer wässrigen FeCl₃-Lösung (w(Fe)= 7 %) und 462 ml einer wässrigen TiCl₄-Lösung (200 g TiCl₄/l) zugegeben. Während der gesamten Zugabezeit wird der pH-Wert durch gleichzeitiges Zutropfen einer 32 %igen Natronlauge konstant gehalten. Nach 0,5 h Nachrühren wird der pH-Wert auf 7,5 angehoben und bei diesem pH-Wert werden 650 ml Natronwasserglaslösung (13 Gew.% SiO₂) langsam zudosiert, wobei der pH-Wert mit 10 %iger Salzsäure konstant gehalten wird. Nach einer weiteren Nachrührzeit von 0,5 h wird der pH-Wert mit 10 %iger Salzsäure auf pH 1,8 abgesenkt und eine Lösung aus 5 g SnCl4 x 5 H₂O und 41 ml Salzsäure (20 %) zudosiert. Beim gleichen pH-Wert werden nun 105 ml TiCl₄-Lösung (400 g/l TiCl₄) langsam zudosiert. Nun folgt eine erneute Zugabe einer Lösung bestehend aus 5 g SnCl₄ x 5 H₂O und 41 ml Salzsäure (20 %). Der pH-Wert wird jeweils mit 32 %iger Natronlauge konstant bei 1,8 gehalten. Im Anschluss wird der pH-Wert wieder mittels Natronlauge auf pH 2,8 gestellt. Die äußerste Schicht wird abschließend durch parallele Zugabe von 650 ml einer wässrigen FeCl₃-Lösung (w(Fe) = 7 %) und 499 ml einer wässrigen TiCl₄-Lösung (200 g TiCl₄/l) und gleichzeitiges Titrieren mit Natronlauge (w=10 %) aufgebracht. Nach einer Nachrührzeit von 0,5 h bei pH 3,0 wird das beschichtete Glimmersubstrat abfiltriert, gewaschen und bei 110 °C 16 h getrocknet. Zuletzt wird das so erhaltene Effektpigment 0,5 h bei 850 °C geglüht und gesiebt.

Man erhält ein temperaturstabiles goldenes Mehrschichtpigment mit hoher Brillianz und gutem Deckvermögen.

### Beispiel 3

100 g natürlicher Glimmer der Teilchengröße < 15 µm werden in 2 l entmineralisiertem Wasser unter Rühren auf 80 °C erhitzt. Nach Erreichen dieser Temperatur wird bei pH 1,8 53 g TiCl₄-Lösung (400 g/l TiCl₄) zudosiert, wobei der pH-Wert mit 32 %iger Natronlauge konstant gehalten wird. Anschließend wird der pH-Wert mittels Natronlauge auf pH 2,8 eingestellt und bei diesem pH-Wert und 75 °C werden gleichzeitig 640 ml einer wässrigen FeCl₃-Lösung (w(Fe) = 7 %) und 501 ml einer wässrigen TiCl₄-Lösung (200 g TiCl₄/l) zugegeben. Während der gesamten Zugabezeit wird der pH-Wert durch gleichzeitiges Zutropfen einer 32 %igen Natronlauge konstant gehalten. Nach 0,5 h Nachrühren wird der pH-Wert auf 7,5 angehoben und bei diesem pH-Wert werden 650 ml Natronwasserglaslösung (13 Gew.% SiO₂) langsam zudosiert, wobei der pH-Wert mit 10 %iger Salzsäure konstant gehalten wird. Nach einer weiteren Nachrührzeit von 0,5 h wird der pH-Wert mit 10 %iger Salzsäure auf pH 1,8 abgesenkt und eine Lösung aus 5 g SnCl₄ x 5 H₂O und 41 ml Salzsäure (20 %) zudosiert. Beim gleichen pH-Wert werden nun 105 ml TiCl₄-Lösung (400 g/l TiCl₄) langsam zudosiert. Nun folgt eine erneute Zugabe einer Lösung bestehend aus 5 g SnCl₄ x 5 H₂O und 41 ml Salzsäure (20 %). Der pH-Wert wird jeweils mit 32 %iger Natronlauge konstant bei 1,8 gehalten. Im Anschluss wird der pH-Wert wieder mittels Natronlauge auf pH 2,8 gestellt. Die äußerste Schicht wird abschließend durch parallele Zugabe von 650 ml einer wässrigen FeCl₃-Lösung (w(Fe) = 7 %) und 499 ml einer wässrigen TiCl₄-Lösung (200 g TiCl₄/l) und gleichzeitiges Titrieren mit Natronlauge (w = 10 %) aufgebracht. Nach einer Nachrührzeit von 0,5 h bei pH 3,0 wird das beschichtete Glimmersubstrat abfiltriert, gewaschen und bei 110 °C 16 h getrocknet. Zuletzt wird das so erhaltene Effektpigment 0,5 h bei 850 °C geglüht und danach gesiebt.

Man erhält ein temperaturstabiles goldenes Mehrschichtpigment mit hohem Deckvermögen.

### Beispiel 4

100 g Borosilikat-Glasplättchen der Teilchengröße 20-200 µm werden in 2 l entmineralisiertem Wasser unter Rühren auf 80 °C erhitzt. Nach Erreichen dieser Temperatur wird bei pH 1,8 38 g TiCl₄-Lösung (400 g/l TiCl₄) zudosiert, wobei der pH-Wert mit 32 %iger Natronlauge konstant gehalten wird. Anschließend wird der pH-Wert mittels Natronlauge auf pH 2,8 eingestellt und bei diesem pH-Wert und 75 °C gleichzeitig 508 ml einer wässrigen FeCl₃-Lösung (w(Fe) = 7 %) und 431 ml einer wässrigen TiCl₄-Lösung (200 g TiCl₄/l) zugegeben. Während der gesamten Zugabezeit wird der pH-Wert durch gleichzeitiges Zutropfen einer 32 %igen Natronlauge konstant gehalten. Nach 0,5 h Nachrühren wird der pH-Wert auf 7,5 angehoben und bei diesem pH-Wert werden 650 ml Natronwasserglaslösung (13 Gew.% SiO₂) langsam zudosiert, wobei der pH-Wert mit 10 %iger Salzsäure konstant gehalten wird. Nach einer weiteren Nachrührzeit von 0,5 h wird der pH-Wert mit 10 %iger Salzsäure auf pH 1,8 abgesenkt und eine Lösung aus 5 g SnCl₄ x 5 H₂O und 41 ml Salzsäure (20 %) zudosiert. Beim gleichen pH-Wert werden nun 105 ml TiCl₄-Lösung (400 g/l TiCl₄) langsam zudosiert. Nun folgt eine erneute Zugabe eine Lösung bestehend aus 5 g SnCl₄ x 5 H₂O und 41 ml Salzsäure (20 %). Der pH-Wert wird jeweils mit 32 %iger Natronlauge konstant bei 1,8 gehalten. Im Anschluss wird der pH-Wert wieder mittels Natronlauge auf pH 2,8 gestellt. Die äußerste Schicht wird abschließend durch parallele Zugabe von 650 ml einer wässrigen FeCl₃-Lösung (w(Fe) = 7 %) und 499 ml einer wässrigen TiCl₄-Lösung (200 g TiCl₄/l) und gleichzeitiges Titrieren mit Natronlauge (w = 10 %) aufgebracht. Nach einer Nachrührzeit von 0,5 h bei pH 3,0 werden die so beschichteten Glasplättchen abfiltriert, gewaschen und bei 110 °C 16 h getrocknet. Zuletzt wird das Effektpigment 0,5 h bei 850 °C geglüht und gesiebt.

Man erhält ein temperaturstabiles goldenes Mehrschichtpigment mit sehr starkem Glitzereffekt.

### Beispiel 5

100 g SiO₂-Plättchen der Teilchengröße 10-40 µm werden in 2 l entmineralisiertem Wasser unter Rühren auf 80 °C erhitzt. Nach Erreichen dieser Temperatur wird bei pH 1,8 44 g TiCl₄-Lösung (400 g/l TiCl₄) zudosiert, wobei der pH-Wert mit 32 %iger Natronlauge konstant gehalten wird. Anschließend wird der pH-Wert mittels Natronlauge auf pH 2,8 eingestellt und bei diesem pH-Wert und 75° C gleichzeitig 600 ml einer wässrigen FeCl₃-Lösung (w(Fe) = 7%) und 462 ml einer wässrigen TiCl₄-Lösung (200 g TiCl₄/l) zugegeben. Während der gesamten Zugabezeit wird der pH-Wert durch gleichzeitiges Zutropfen einer 32 %igen Natronlauge konstant gehalten. Nach 0,5 h Nachrühren wird der pH-Wert auf 7,5 angehoben und bei diesem pH-Wert werden 650 ml Natronwasserglaslösung (13 Gew.% SiO₂) langsam zudosiert, wobei der pH-Wert mit 10 %iger Salzsäure konstant gehalten wird. Nach einer weiteren Nachrührzeit von 0,5 h wird der pH-Wert mit 10 %iger Salzsäure auf pH 1,8 abgesenkt und eine Lösung aus 5 g SnCl₄ x 5 H₂O und 41 ml Salzsäure (20 %) zudosiert. Beim gleichen pH-Wert werden nun 105 ml TiCl₄-Lösung (400 g/l TiCl₄) langsam zudosiert. Anschließend erfolgt eine erneute Zugabe einer Lösung bestehend aus 5 g SnCl₄ x 5 H₂O und 41 ml Salzsäure (20 %). Der pH-Wert wird jeweils mit 32 %iger Natronlauge konstant bei 1,8 gehalten. Im Anschluss wird der pH-Wert wieder mittels Natronlauge auf pH 2,8 gestellt. Die äußerste Schicht wird abschließend durch parallele Zugabe von 650 ml einer wässrigen FeCl₃-Lösung (w(Fe) = 7%) und 499 ml einer wässrigen TiCl₄-Lösung (200 g TiCl₄/l) und gleichzeitiges Titrieren mit Natronlauge (w = 10 %) aufgebracht. Nach einer Nachrührzeit von 0,5 h bei pH 3,0 werden die so beschichteten SiO₂-Plättchen abfiltriert, gewaschen und bei 110°C 16 h getrocknet. Zuletzt wird das Effektpigment 0,5 h bei 850 °C geglüht und gesiebt.

Man erhält ein temperaturstabiles goldenes Mehrschichtpigment mit hoher Brillianz und gutem Deckvermögen.

### Beispiel 6

100 g synthetischer Glimmer der Teilchengröße 10-40 µm werden in 2 l entmineralisiertem Wasser unter Rühren auf 80°C erhitzt. Nach Erreichen dieser Temperatur wird bei pH 1,8 44 g TiCl₄-Lösung (400 g/l TiCl₄) zudosiert, wobei der pH-Wert mit 32 %iger Natronlauge konstant gehalten wird. Anschließend wird der pH-Wert mittels Natronlauge auf pH 2,8 eingestellt und bei diesem pH-Wert und 75° C gleichzeitig 600 ml einer wässrigen FeCl₃-Lösung (w(Fe) = 7 %) und 462 ml einer wässrigen TiCl₄-Lösung (200 g TiCl₄/l) zugegeben. Während der gesamten Zugabezeit wird der pH-Wert durch gleichzeitiges Zutropfen einer 32 %igen Natronlauge konstant gehalten. Nach 0,5 h Nachrühren wird der pH-Wert auf 7,5 angehoben und bei diesem pH-Wert werden 650 ml Natronwasserglaslösung (13 Gew.% SiO₂) langsam zudosiert, wobei der pH-Wert mit 10 % Salzsäure konstant gehalten wird. Nach einer weiteren Nachrührzeit von 0,5 h wird der pH-Wert mit 10 % Salzsäure auf pH 1,8 abgesenkt und eine Lösung aus 5 g SnCl₄ x 5 H₂O und 41 ml Salzsäure (20 %) zudosiert. Beim gleichen pH-Wert werden nun 105 ml TiCl₄-Lösung (400 g/l TiCl₄) langsam zudosiert. Nun folgt eine erneute Zugabe eine Lösung bestehend aus 5 g SnCl₄ x 5 H₂O und 41 ml Salzsäure (20%). Der pH-Wert wird jeweils mit 32 %iger Natronlauge konstant bei 1,8 gehalten. Im Anschluss wird der pH-Wert wieder mittels Natronlauge auf pH 2,8 gestellt. Die äußerste Schicht wird abschließend durch parallele Zugabe von 650 ml einer wässrigen FeCl₃-Lösung (w(Fe)= 7 %) und 499 ml einer wässrigen TiCl₄-Lösung (200 g TiCl₄/l) und gleichzeitiges Titrieren mit Natronlauge (w=10 %) aufgebracht. Nach einer Nachrührzeit von 0,5 h bei pH 3,0 wird das beschichtete Glimmersubstrat abfiltriert, gewaschen und bei 110 °C 16 h getrocknet. Zuletzt wird das so erhaltene Effektpigment 0,5 h bei 850 °C geglüht und gesiebt.

Man erhält ein temperaturstabiles goldenes Mehrschichtpigment mit hoher Brillianz und moderatem Deckvermögen.

### Beispiel 7

100 g Talk der Teilchengröße < 10 µm werden in 2 l entmineralisiertem Wasser unter Rühren auf 80 °C erhitzt. Nach Erreichen dieser Temperatur wird bei pH 1,8 44 g TiCl4-Lösung(400 g/l TiCl₄) zudosiert, wobei der pH-Wert mit 32 %iger Natronlauge konstant gehalten wird. Anschließend wird der pH-Wert mittels Natronlauge auf pH 2,8 eingestellt und bei diesem pH-Wert und 75 °C gleichzeitig 600 ml einer wässrigen FeCl₃-Lösung (w(Fe) = 7 %) und 462 ml einer wässrigen TiCl₄-Lösung (200 g TiCl₄/l) zugegeben. Während der gesamten Zugabezeit wird der pH-Wert durch gleichzeitiges Zutropfen einer 32 %igen Natronlauge konstant gehalten. Nach 0,5 h Nachrühren wird der pH-Wert auf 7,5 angehoben und bei diesem pH-Wert werden 650 ml Natronwasserglaslösung (13 Gew.% SiO₂) langsam zudosiert, wobei der pH-Wert mit 10 %iger Salzsäure konstant gehalten wird. Nach einer weiteren Nachrührzeit von 0,5 h wird der pH-Wert mit 10 %iger Salzsäure auf pH 1,8 abgesenkt und eine Lösung aus 5 g SnCl₄ x 5 H₂O und 41 ml Salzsäure (20 %) zudosiert. Beim gleichen pH-Wert werden nun 105 ml TiCl₄-Lösung (400 g/l TiCl₄) langsam zudosiert. Nun folgt eine erneute Zugabe einer Lösung bestehend aus 5 g SnCl₄ x 5 H₂O und 41 ml Salzsäure (20 %). Der pH-Wert wird jeweils mit 32 %iger Natronlauge konstant bei 1,8 gehalten. Im Anschluss wird der pH-Wert wieder mittels Natronlauge auf pH 2,8 gestellt. Die äußerste Schicht wird abschließend durch parallele Zugabe von 650 ml einer wässrigen FeCl₃-Lösung (w(Fe) = 7 %) und 499 ml einer wässrigen TiCl₄-Lösung (200 g TiCl₄/l) und gleichzeitiges Titrieren mit Natronlauge (w = 10 %) aufgebracht. Nach einer Nachrührzeit von 0,5 h bei pH 3,0 werden die so beschichteten Talkplättchen abfiltriert, gewaschen und bei 110 °C 16 h getrocknet. Zuletzt wird das so erhaltene Effektpigment 0,5 h bei 850 °C geglüht und gesiebt.

Man erhält ein temperaturstabiles goldenes Mehrschichtpigment mit hohem Deckvermögen.

### Beispiel 8

100 g natürlicher Glimmer der Teilchengröße 20-180 µm werden in 2 l entmineralisiertem Wasser unter Rühren auf 80 °C erhitzt. Nach Erreichen dieser Temperatur wird bei pH 1,8 38 g TiCl₄-Lösung (400 g/l TiCl₄) zudosiert, wobei der pH-Wert mit 32 %iger Natronlauge konstant gehalten wird. Anschließend wird der pH-Wert mittels Natronlauge auf pH 2,8 eingestellt und bei diesem pH-Wert und 75 °C gleichzeitig 508 ml einer wässrigen FeCl₃-Lösung (w(Fe) = 7 %) und 431 ml einer wässrigen TiCl₄-Lösung (200 g TiCl₄/l) zugegeben. Während der gesamten Zugabezeit wird der pH-Wert durch gleichzeitiges Zutropfen einer 32 %igen Natronlauge konstant gehalten. Nach 0,5 h Nachrühren wird der pH-Wert auf 7,5 angehoben und bei diesem pH-Wert werden 650 ml Natronwasserglaslösung (13 Gew.% SiO₂) langsam zudosiert, wobei der pH-Wert mit 10 %iger Salzsäure konstant gehalten wird. Nach einer weiteren Nachrührzeit von 0,5 h wird der pH-Wert mit 10 %iger Salzsäure auf pH 1,8 abgesenkt und eine Lösung aus 5 g SnCl₄ x 5 H₂O und 41 ml Salzsäure (20 %) zudosiert. Beim gleichen pH-Wert werden nun 105 ml TiCl₄-Lösung (400 g/l TiCl₄) langsam zudosiert. Anschließend erfolgt eine erneute Zugabe eine Lösung bestehend aus 5 g SnCl₄ x 5 H₂O und 41 ml Salzsäure (20 %). Der pH-Wert wird jeweils mit 32 %iger Natronlauge konstant bei 1,8 gehalten. Im Anschluss wird der pH-Wert wieder mittels Natronlauge auf pH 2,8 gestellt. Die äußerste Schicht wird abschließend durch parallele Zugabe von 650 ml einer wässrigen FeCl₃-Lösung (w(Fe) = 7 %) und 499 ml einer wässrigen TiCl₄-Lösung (200 g TiCl₄/l) und gleichzeitiges Titrieren mit Natronlauge (w = 10 %) aufgebracht. Nach einer Nachrührzeit von 0,5 h bei pH 3,0 wird das beschichtete Glimmersubstrat abfiltriert, gewaschen und bei 110 °C 16 h getrocknet. Zuletzt wird das Effektpigment 0,5 h bei 850 °C geglüht und gesiebt.

Man erhält ein temperaturstabiles goldenes Mehrschichtpigment mit starkem Glitzereffekt.

### Anwendungsbeispiele

Prozessbeschreibung zur Dekoration keramischer Werkstücke
A - keramisches Substrat
B - Engobe
C - Glasur
D - Dekoration/Applikation
E - Brennen
A = ungebrannte, vorgebrannte (Biskuit), glasierte Feinsteinzeug-, Steinzeug/gut-Fliesen, Porzellan (z.B. Hartporzellan, Weichporzellan, Fine China, Bone China, Biskuitporzellan, Steinzeug, Steingut)

**Tabelle 1: Substrate**

| *Bsp.* | *ungebrannt* | *vorgebrannt (Biskuit)* | *mit Engobe* | *glasiert* | *gebrannt* |
|---|---|---|---|---|---|
| 1 | Feinsteinzeugfliese | Feinsteinzeugfliese | Feinsteinzeugfliese | Feinstein zeugfliese | Feinsteinzeugfliese |
| 2 | Steinzeugfliese | Steinzeugfliese | Steinzeugfliese | Steinzeugfliese | Steinzeugfliese |
| 3 | Steingutfliese | Steingutfliese | Steingutfliese | Steingutfliese | Steingutfliese |
| 4 | Hartporzellan | Hartporzellan | Hartporzellan | Hartporzellan | Hartporzellan |
| 5 | Weichporzellan | Weichporzellan | Weichporzellan | Weichpor zellan | Weichporzellan |
| 6 | Fine China | Fine China | Fine China | Fine China | Fine China |
| 7 | Bone China | Bone China | Bone China | Bone China | Bone China |
| 8 | Biskuitporzellan | Biskuitporzellan | Biskuitporzellan | Biskuitpor zellan | Biskuitporzellan |
| 9 | Steinzeugporzellan | Steinzeugporzellan | Steinzeugporzellan | Steinzeugporzellan | Steinzeugporzellan |
| 10 | Steingutporzellan | Steingutporzellan | Steingutporzellan | Steingutporzellan | Steingutporzellan |

B = handelsübliche Engoben, mit unterschiedlichsten Funktionen, wie z.B. Abdecken der Substrat Farbe, Beeinflussung chemischer und physikalischer Reaktionen, Verbesserung der Haftung zwischen Glasur und Substrat.
C = z.B. handelsübliche Glasuren, Glasuren mit Effektpigmenten, eingefärbte Glasuren
D = z.B. Rotativer und Flach-Siebdruck sowohl direkt als auch indirekt über Abziehbilder (Decal), Rotocolor, Sprühapplikation, (Hand-)Malerei, Tauchen, Wasserfall, Airless-Sprühapplikation, jegliche Applikation mit Dekorationspulver (z.B. grit Vetrosa) z.B. vorgedruckter Kleber, anschließend mit Dekorationspulver überstreut und zum Schluss abgesaugt oder -geblasen.

**Tabelle 2: Applikationen**

| *Bsp.* | *Applikation* |
|---|---|
| 1 | Rotativer Siebdruck direkt |
| 2 | Flach-Siebdruck direkt |
| 3 | Rotativer Siebdruck indirekt über Abziehbilder |
| 4 | flach-Siebdruck indirekt über Abziehbilder |
| 5 | Rotocolor |
| 6 | Sprühapplikation |
| 7 | (Hand-)Malerei |
| 8 | Tauchen |
| 9 | Wasserfall |
| 10 | Airless-Sprühapplikation |
| 11 | jegliche Applikationen mit Dekorationspulver (z.B. grit Vetrosa) z.B. vorgedruckter Kleber, anschließend mit Dekorationspulver überstreut und zum Schluss abgesaugt oder -geblasen. |

Bei Punkt D kann die Dekoration neben der keramischen Farbe vorzugsweise noch einen oder mehrere Vordrucke (im Folgenden Underlay genannt) haben, der vollflächig oder partiell erfolgen kann. Letzteres kann interessante Effekte hervorrufen (Reliefdruck). Über die Wahl des Underlay kann der Glanzgrad der pigmentierten Glasur beeinflusst werden. Die Underlays können mit anorganischen Pigmenten wie auch mit Effektpigmenten eingefärbt werden.

**Tabelle 3: Beispielformulierungen Liquid-Metall-Dekoration**

| *Beispiel-formulierung Nr.* | *Effekt-pigment** [g]* | *Fritte*/*Fluss*/ *Glasur*/ *Printing Base *[g]* | *Applikations-medium* *** *[g]* | *WPigm im Feststoff [%]* | *WPigm in Paste [%]* |
|---|---|---|---|---|---|
| 1 | 0,01 | 1 | 2 | 0,99 | 0,33 |
| 2 | 0,15 | 0,5 | 2 | 23,08 | 5,66 |
| 3 | 0,3 | 0,25 | 2 | 54,55 | 11,76 |
| 4 | 0,5 | 0,05 | 2 | 90,91 | 19,61 |
| 5 | 0,01 | 1 | 3 | 0,99 | 0,25 |
| 6 | 0,15 | 0,5 | 3 | 23,08 | 4,11 |
| 7 | 0,3 | 0,25 | 3 | 54,55 | 8,45 |
| 8 | 0,5 | 0,05 | 3 | 90,91 | 14,08 |
| 9 | 0,01 | 2 | 2 | 0,50 | 0,25 |
| 10 | 0,15 | 1,5 | 2 | 9,09 | 4,11 |
| 11 | 0,3 | 1 | 2 | 23,08 | 9,09 |
| 12 | 0,5 | 0,5 | 2 | 50,00 | 16,67 |
| 13 | 0,01 | 0 | 2 | 100,00 | 0,50 |
| 14 | 0,15 | 3 | 2 | 4,76 | 2,91 |
| 15 | 0,3 | 1,2 | 2 | 20,00 | 8,57 |
| 16 | 0,5 | 0,7 | 2 | 41,67 | 15,62 |
| 17 | 4,5 | 0,5 | 2 | 90,00 | 64,29 |
| 18 | 0,5 | 0,25 | 2 | 66,67 | 18,18 |
| 19 | 4,9 | 0,1 | 2 | 98,00 | 70,00 |

| | | | | | |
|---|---|---|---|---|---|
| *z.B. Ferro 107810, Ferro 1055070, Colorobbia GVFK5003 | | | | | |

Zum Einsatz können ebenfalls kommerziell erhältliche Fritten kommen, die nachfolgende Zusammensetzung aufweisen:

| Fritte | MgO | CaO | ZnO | BaO | Na₂O | K₂O | Al₂O₃ | B₂O₃ | SiO₂ | TiO₂ | ZrO₂ | GeO₂ |
|---|---|---|---|---|---|---|---|---|---|---|---|---|
| A1 | 1,20 | 0,00 | 3,60 | 2,50 | 4,90 | 1,70 | 10,40 | 29,00 | 45,50 | 0,20 | 1,00 | 0,00 |
| A2 | 0,00 | 0,30 | 2,50 | 0,60 | 3,40 | 3,60 | 9,30 | 20,10 | 55,20 | 0,20 | 4,80 | 0,00 |
| A3 | 0,20 | 0,80 | 0,00 | 2,30 | 3,20 | 2,30 | 7,40 | 15,70 | 32,40 | 0,00 | 3,30 | 32,40 |

| | | | | | | | | | | | | |
|---|---|---|---|---|---|---|---|---|---|---|---|---|
| ** Effektpigment der Pigmentbeispiele 1-8 ***z.B. Ferro - 221-ME/80 850/80 840, Sicer - SM112/SM114/SM140, Zschimmer&Schwarz - WB110, CMC-Verdicker | | | | | | | | | | | | |

**Tabelle 4: Beispielformulierungen Underlay**

| *Beispiel-formulierung Nr.* | *Fritte*/*Glasur*/ *Printing Base** *[g]* | *Siebdruck Medium***[g]* | *WSolid in Paste [%]* |
|---|---|---|---|
| 1 | 1 | 2 | 33,33 |
| 2 | 0,5 | 2 | 20,00 |
| 3 | 0,25 | 2 | 11,11 |
| 4 | 0,05 | 2 | 2,44 |
| 5 | 1 | 3 | 25,00 |
| 6 | 0,5 | 3 | 14,29 |
| 7 | 0,25 | 3 | 7,69 |
| 8 | 0,05 | 3 | 1,64 |
| 9 | 2 | 2 | 50,00 |
| 10 | 1,5 | 2 | 42,86 |
| 11 | 1 | 2 | 33,33 |
| 12 | 0,5 | 2 | 20,00 |
| 13 | 0 | 2 | 0,00 |
| 14 | 3 | 2 | 60,00 |
| 15 | 1,2 | 2 | 37,50 |
| 16 | 0,7 | 2 | 25,93 |
| 17 | 0,5 | 2 | 20,00 |
| 18 | 0,25 | 2 | 11,11 |
| 19 | 0,1 | 2 | 4,76 |

E = Brennen, kann unterschiedlich oft, bei verschiedensten Temperaturen und Temperaturprofilen erfolgen und auch zwischen den einzelnen Applikationen. Auch die Ofenatmosphäre spielt eine Rolle für den finalen Effekt, je mehr Sauerstoff beim Brennprozess vorhanden ist, desto besser wird der Effekt.

Die Punkte A-E müssen in der Anwendung nicht zwingend alle erfolgen, je nach Fall werden Punkte übersprungen oder ersetzt. Im Allgemeinen lassen sich zum Erreichen des beschriebenen Effektes die einzelnen Punkte A-E beliebig kombinieren und/oder auch doppelt anwenden.

Alle Kombinationen aus A-E (Tabellen) können mit den Effektpigmenten gemäß der Beispiele 1-8 den Liquid Metall-Effekt erzeugen.

Weiterhin werden neben den Effektpigmenten der Beispiele 1 bis 8 die nachfolgend genannten kommerziell erhältlichen Effektpigmente in den Kombinationen aus A-E analog getestet:
Iriodin^{®} 305 (Fa. Merck KGaA)
Iriodin^{®} 306 (Fa. Merck KGaA)
Iriodin^{®} 326 (Fa. Merck KGaA)

Ausschließlich mit den Effektpigmenten der Beispiele 1-8 ist es möglich, einen Liquid Metal Effect zu erzeugen, da nur diese Pigmente sich während des Einbrandes auflösen und in situ eine glänzende Glasuroberfläche mit einem Liquid Metal Effect bilden.

### Siebdruck - Beispiel A1: Siebdruckapplikation mit Underlay, indirekt (Abziehbild/Decal) auf Fine China

### Material:

- Siebdruck "Formulierungen Underlay" nach Tabelle 4
- Siebdruck "Formulierungen Liquid-Metal-Dekoration" nach Tabelle 3

Die Underlay Schicht wird auf das Abziehbildpapier vorgedruckt und bei 0-40 °C bis zur Wischfestigkeit zwischengetrocknet. Anschließend wird die Dekorpaste deckungsgleich auf die Underlayschicht gedruckt. Danach wird wieder bei 0-40 °C bis zur Wischfestigkeit zwischengetrocknet. Dann wird ein Cover Coat (Ferro 80 450) übergedruckt und wieder bei 0-40 °C bis zur Wischfestigkeit getrocknet.

Das fertige Abziehbild wird mit Hilfe von Wasser abgelöst und auf Fine China (Teller von Villeroy & Boch) appliziert und in 40 Minuten auf 800 °C aufgeheizt und mit 20 Minuten Haltezeit eingebrannt.

### Siebdruck - Beispiel A2: Siebdruckapplikation mit Underlay, indirekt (Abziehbild/Decal) auf Bone China

### Material:

- Siebdruck "Formulierungen Underlay" nach Tabelle 4
- Siebdruck "Formulierungen Liquid-Metal-Dekoration" nach Tabelle 3

Die Underlay Schicht wird auf das Abziehbildpapier vorgedruckt und bei 0-40 °C bis zur Wischfestigkeit zwischengetrocknet. Anschließend wird die Dekorpaste deckungsgleich auf die Underlayschicht gedruckt. Danach wird wieder bei 0-40 °C bis zur Wischfestigkeit zwischengetrocknet. Dann wird ein Cover Coat (Ferro 80 450) übergedruckt und wieder bei 0-40 °C bis zur Wischfestigkeit getrocknet.

Das fertige Abziehbild wird mit Hilfe von Wasser abgelöst und auf Fine China (Teller von z.B. Rosenthal) appliziert und zum Schluss bei 40 Minuten auf 800 °C mit 20 Minuten Haltezeit eingebrannt.

### Siebdruck - Beispiel A3: Siebdruckapplikation mit Underlay, indirekt (Abziehbild/Decal) auf Porzellan:

### Material:

- Siebdruck "Formulierungen Underlay" nach Tabelle 4
- Siebdruck "Formulierungen Liquid-Metal-Dekoration" nach Tabelle 3

Die Underlay Schicht wird auf das Abziehbildpapier vorgedruckt und bei 0-40 °C bis zur Wischfestigkeit zwischengetrocknet. Anschließend wird die Dekorpaste deckungsgleich auf die Underlayschicht gedruckt. Danach wird wieder bei 0-40 °C bis zur Wischfestigkeit zwischengetrocknet. Dann wird ein Cover Coat (Ferro 80 450) übergedruckt und wieder bei 0-40 °C bis zur Wischfestigkeit getrocknet.

Das fertige Abziehbild wird mit Hilfe von Wasser abgelöst und auf Fine China (Teller von z.B. Seltmann/Weiden) appliziert und zum Schluss bei 40 Minuten auf 800 °C mit 20 Minuten Haltezeit eingebrannt.

Die eingebrannten Effektglasuren mit dem erfindungsgemäßen Pigment/Fritten-Gemisch (unter Verwendung der Fritten A1 und A2) zeichnen sich durch einen besonders hohen Glanz in Kombination mit niedrigem Sparkle aus und zeigen den gewünschten Liquid Metall-Effekt. Die eingebrannten Effektglasuren mit dem Pigment/Fritten-Gemisch (unter Verwendung der Fritte A3) zeichnen sich durch einen besonders niedrigen Glanz in Kombination mit hohem Sparkle aus und zeigen den gewünschten Liquid Metall-Effekt nicht.

Der Glanz wird mit einem Rhopoint IQ mini 2.0 gemessen. Die Liquid Metal Glasuren zeichnen sich durch folgende Glanzwerte aus:

| Bewertung des Liquid-Metal Effekts | Glanz (20 °) | Haze Wert |
|---|---|---|
| gut | > 20 | 50 |
| schlecht | < 20 | < 30 |

## Patentansprüche

1. Effektpigment/Fritten-Gemisch, **dadurch gekennzeichnet, dass** das Effektpigment auf plättchenförmigen Substraten basiert, die auf der Oberfläche mindestens eine Schichtenfolge (A)-(E) bzw.
(A) bis (F)
(A) einer hochbrechenden Beschichtung mit einem Brechungsindex von n ≥ 1,8
(B) einer Pseudobrookit-Schicht, die optional mit ein oder mehreren Oxiden in Mengen von ≤ 10 Gew.% bezogen auf Schicht (B) dotiert sein kann,
(C) einer niedrigbrechenden Schicht mit einem Brechungsindex von n < 1,8
(D) einer hochbrechenden Beschichtung bestehend aus mindestens 2 farblosen Metalloxidschichten
(E) einer Pseudobrookit-Schicht, die optional mit ein oder mehreren Oxiden in Mengen von ≤ 10 Gew.% bezogen auf Schicht (E) dotiert sein kann,
und optional
(F) einer äußere Schutzschicht
aufweist und die Fritte 50-70 Gew.% SiO₂ + Al₂O₃ und 15-35 Gew.% B₂O₃ + Na₂O + K₂O enthält, wobei der Gesamtanteil aller Bestandteile der Fritte 100 % beträgt und in der Zusammensetzung der Fritte die Komponenten (in Gew.-%) der Summenformel Al₂O₃ + Si₂O₃ - B₂O₃ - Na₂O - K₂O = 20-50 % entsprechen.

2. Effektpigment/Fritten-Gemisch nach Anspruch 1, **dadurch gekennzeichnet, dass** die plättchenförmigen Substrate des Effektpigments ausgewählt sind aus der Gruppe Schichtsilikate, BiOCl, SiC-, TiC-, WC-, B₄C-, BN-, Graphit-, TiO₂-, Fe₂O₃-Plättchen, dotierte oder undotierte Al₂O₃-Plättchen, dotierte oder undotierte Glasplättchen, dotierte oder undotierte SiO₂-Plättchen oder deren Gemische.

3. Effektpigment/Fritten-Gemisch nach Anspruch 1 oder 2, **dadurch gekennzeichnet, dass** es sich bei den Schichtsilikatplättchen um natürlichen Glimmer, synthetischen Glimmer, Kaolin oder Talk handelt.

4. Effektpigment/Fritten-Gemisch nach einem oder mehreren der Ansprüche 1 bis 3, **dadurch gekennzeichnet, dass** die Schicht (A) des Effektpigments aus ein oder mehreren Metalloxiden besteht.

5. Effektpigment/Fritten-Gemisch nach einem der mehreren der Ansprüche 1 bis 4, **dadurch gekennzeichnet, dass** das Metalloxid der Schicht (A) ausgewählt ist aus der Gruppe TiO₂, Fe₂O₃, Fe₃O₄, Fe(O)OH, BiOCl, Cr₂O₃, ZnO, Ce₂O₃, ZrO₂, SnO₂, Co₂O₃, Ti-Suboxiden (TiO₂ teilweise reduziert mit Oxidationszahlen von <4 bis 2 und niedere Oxide oder deren Gemische), Titanoxynitride, Titannitrid, CoO, Co₂O₃, Co₃O₄, VO₂, V₂O₃, NiO, WO3, MnO, Mn₂O₃ oder Gemische der genannten Oxide

6. Effektpigment/Fritten-Gemisch nach einem oder mehreren der Ansprüche 1 bis 5, **dadurch gekennzeichnet, dass** die Schicht(en) (B) und/oder((E) mit ein oder mehreren Oxiden oder Oxidgemischen ausgewählt aus der Gruppe Al₂O₃, Ce₂O₃, B₂O₃, ZrO₂, SnO₂, Cr₂O₃, CoO, Co₂O₃, Co₃O₄, Mn₂O₃ dotiert ist (sind).

7. Effektpigment/Fritten-Gemisch nach einem oder mehreren der Ansprüche 1 bis 6, **dadurch gekennzeichnet, dass** die Schicht (C) des Effektpigments aus SiO₂, MgO*SiO₂, CaO*SiO₂, Al₂O₃*SiO₂, B₂O₃*SiO₂ oder aus einem Gemisch der genannten Verbindungen besteht.

8. Effektpigment/Fritten-Gemisch nach einem oder mehreren der Ansprüche 1 bis 7, **dadurch gekennzeichnet, dass** die Schicht (D) des Effektpigments aus mindestens zwei Metalloxidschichten besteht, wobei die Metalloxide ausgewählt sind aus der Gruppe SnO₂, TiO₂, Al₂O₃, Cr₂O₃, Fe₂O₃ oder deren Gemische.

9. Effektpigment/Fritten-Gemisch nach einem oder mehreren der Ansprüche 1 bis 8, **dadurch gekennzeichnet, dass** die Schicht (D) des Effektpigments aus den Metalloxidschichten (D1) und (D2)
(D1) SnO₂-Schicht
(D2) TiO₂-Schicht
besteht.

10. Effektpigment/Fritten-Gemisch nach einem oder mehreren der Ansprüche 1 bis 8, **dadurch gekennzeichnet, dass** die Schicht (D) des Effektpigments aus den Metalloxidschichten (D1), (D2) und (D3)
(D1) Al₂O₃-Schicht
(D2) TiO₂-Schicht
(D3) Al₂O₃-Schicht
besteht.

11. Effektpigment/Fritten-Gemisch nach einem oder mehreren der Ansprüche 1 bis 8, **dadurch gekennzeichnet, dass** die Schicht (D) aus den Metalloxidschichten (D1), (D2) und (D3)
(D1) SnO₂-Schicht
(D2) TiO₂-Schicht
(D3) SnO₂-Schicht
besteht.

12. Effektpigment/Fritten-Gemisch nach einem oder mehreren der Ansprüche 1 bis 11, **dadurch gekennzeichnet, dass** die äußere Schutzschicht (F) des Effektpigments aus SnO₂ besteht.

13. Effektpigment/Fritten-Gemisch nach einem oder mehreren der Ansprüche 1 bis 12, **dadurch gekennzeichnet, dass** das Effektpigment folgenden Aufbau aufweist:
- Substrat + TiO₂ + Pseudobrookit + SiO₂ + SnO₂ + TiO₂ + SnO₂ + Pseudobrookit
- Substrat + Fe₂O₃ + Pseudobrookit + SiO₂ + SnO₂ + TiO₂ + SnO₂ + Pseudobrookit
- Substrat + Cr₂O₃ + Pseudobrookit + SiO₂ + SnO₂ + TiO₂ + SnO₂ + Pseudobrookit
- Substrat + TiO₂ + Pseudobrookit + MgO*SiO₂ + SnO₂ + TiO₂ + SnO₂ + Pseudobrookit
- Substrat + Fe₂O₃ + Pseudobrookit + MgO*SiO₂ + SnO₂ + TiO₂ + SnO₂ + Pseudobrookit
- Substrat + Cr₂O₃ + Pseudobrookit + MgO*SiO₂ + SnO₂ + TiO₂ + SnO₂ + Pseudobrookit
- Substrat + TiO₂ + Pseudobrookit + CaO*SiO₂ + SnO₂ + TiO₂ + SnO₂ + Pseudobrookit
- Substrat + Fe₂O₃ + Pseudobrookit + CaO*SiO₂ + SnO₂ + TiO₂ + SnO₂ + Pseudobrookit
- Substrat + Cr₂O₃ + Pseudobrookit + CaO*SiO₂ + SnO₂ + TiO₂ + SnO₂ + Pseudobrookit
- Substrat + TiO₂ + Pseudobrookit + Al₂O₃*SiO₂ + SnO₂ + TiO₂ + SnO₂ + Pseudobrookit
- Substrat + Fe₂O₃ + Pseudobrookit + Al₂O₃*SiO₂ + SnO₂ + TiO₂ + SnO₂ + Pseudobrookit
- Substrat + Cr₂O₃ + Pseudobrookit + Al₂O₃*SiO₂ + SnO₂ + TiO₂ + SnO₂ + Pseudobrookit
- Substrat + TiO₂ + Pseudobrookit + SiO₂ + TiO₂ + SnO₂ + Pseudobrookit
- Substrat + TiO₂ + Pseudobrookit + SiO₂ + SnO₂ + TiO₂ + Pseudobrookit
- Substrat + TiO₂ + Pseudobrookit + SiO₂ + TiO₂ + SnO₂ + Pseudobrookit + SnO₂
- Substrat + TiO₂ + Pseudobrookit + SiO₂ + SnO₂ + TiO₂ + Pseudobrookit + SnO₂
- Substrat + TiO₂ + Pseudobrookit + SiO₂ + SnO₂ + Fe₂O₃ + SnO₂ + Pseudobrookit
- Substrat + TiO₂ + Pseudobrookit + SiO₂ + SnO₂ + Cr₂O₃ + SnO₂ + Pseudobrookit
- Substrat + TiO₂ + Pseudobrookit + SiO₂ + Al₂O₃ + TiO₂ + Al₂O₃ + Pseudobrookit

14. Pigment/Fritten-Gemisch nach einem oder mehreren der Ansprüche 1 bis 13, **dadurch gekennzeichnet, dass** die Frittenteilchen Partikelgrößen von 1 - 500 µm aufweisen.

15. Pigment/Fritten-Gemisch nach einem oder mehreren der Ansprüche 1 bis 14, **dadurch gekennzeichnet, dass** die Fritte neben Al₂O₃, SiO₂, B₂O₃, K₂O und Na₂O als weitere Bestandteile mindestens eine Komponente ausgewählt aus der Gruppe TiO₂, Fe₂O₃, MgO, MnO, Cr₂O₃, P₂O₅, PbO, HfO₂, ZnO, ZrO₂, Li₂O, Erdalkalioxid und Oxid der Seltenen Erden enthält.

16. Pigment/Fritten-Gemisch nach einem oder mehreren der Ansprüche 1 bis 15, **dadurch gekennzeichnet, dass** das Pigment/Fritten-Gemisch aus 20-70 Gew.% Effektpigment und 30-80 Gew.% Fritte und optional 0-10 Gew.% ein oder mehrerer Additive besteht, wobei die Summe aus Pigment, Fritte und Additiv(en) 100 % ergibt.

17. Verwendung des Pigment/Fritten-Gemisches nach einem oder mehreren der Ansprüche 1 bis 16 in ungebrannten oder gebrannten Ziegeln, ungebrannten oder gebrannten Ton- und Keramikwaren, keramischen Glasuren.

18. Verwendung des Pigment/Fritten-Gemisches nach Anspruch 16 für Dekorfliesen, zur Dekoration von Porzellan, Bone China und Steingut.

19. Verwendung des Pigment/Fritten-Gemisches nach Anspruch 18 für Porzellanglasuren.

20. Formulierungen enthaltend das Pigment/Fritten-Gemisch nach einem oder mehreren der Ansprüche 1 bis 16.

21. Formulierungen nach Anspruch 20, **dadurch gekennzeichnet, dass** sie folgende Glanzwerte aufweisen (bestimmt mit Goniophotometer Rhopoint IQ mini 2.0):
Glanz (20°) > 20
Haze ≥ 30.

22. Verfahren zur Herstellung von Keramik-Glasuren, **dadurch gekennzeichnet, dass** man das Pigment/Fritten-Gemisch nach einem oder mehreren der Ansprüche 1 bis 16 und ggf. eine Fritte als Zwischenschicht (=Underlay) zwischen Keramik oder Glasur und dem Pigment-Frittengemisch aufträgt, wobei Underlay und das Pigment-Fritten Gemisch separat appliziert werden und nachfolgend gemeinsam eingebrannt werden.
